# EUROPEAN PATENT SPECIFICATION

(11) **EP 0 666 692 B1**
(45) Date of publication and mention of the grant of the patent: **10.11.1999**
(21) Application number: 95106159.7
(22) Date of filing: 21.06.1994
(51) Int. Cl.: H04N 5/926, H04N 5/92

(54) **Apparatus for recording and reproducing compressed or non-compressed digital video data with compression adapter**
Gerät zur Aufzeichnung und Wiedergabe von komprimierten oder nicht-komprimierten digitalen Videodaten mit Kompressionsadapter
Appareil d'enregistrement et de reproduction de données vidéo numériques comprimées ou non-comprimées avec adapteur de compression

(30) Priority: 22.06.1993 JP 15008393
(43) Date of publication of application: 09.08.1995
(62) Divisional of application: 94109531.7
(73) Proprietor: MATSUSHITA ELECTRIC INDUSTRIAL CO., LTD., Kadoma-shi, Osaka (JP)
(72) Inventor: Ootsuka, Takeshi, Kadoma-Shi, Osaka 571 (JP); Hiratsuka, Sachio, Toyonaka-Shi, Osaka 560 (JP); Bannai, Tatsushi, Sakai-Shi, Osaka 588 (JP)
(74) Representative: Eisenführ, Speiser & Partner

(56) References cited:
- EP-A- 0 338 781
- DE-A- 2 947 874
- US-A- 5 218 454

## Description

### BACKGROUND OF THE INVENTION

### 1. Field of the Invention

The present invention relates to an apparatus for recording and reproducing compressed or non-compressed digital video data comprising a separable compression adapter.

### 2. Description of the Related Art

As video tape recording and reproducing apparatuses (referred to as VTRs hereinafter) each for encoding a video signal into digital video signal, recording the digital video signal onto a magnetic tape and reproducing the recorded digital video signal from the magnetic tape, the following VTRs have been put into practical use:
(a) D1-VTR which uses a component signal as a signal to be recorded;
(b) D2-VTR which uses a composite signal as a signal to be recorded; and
(c) D3-VTR.

The details of the D1-VTR are disclosed in, for example, "SMPTE 227M 19-mm type D1 cassette-helical data and control record", SMPTE Journal, March 1992. In the D1-VTR, a video signal is sampled according to the so-called 4:2:2 method, and then the sampled signal is quantized into eight-bit digital video data, which is recorded onto a magnetic tape having a width of 19 mm. In the 4:2:2 method, the luminance signal is sampled at 13.5 MHz, and the two color difference signals are sampled at 6.75 MHz, respectively.

In the D2-VTR, the composite video signal is sampled at the frequency which is four times the frequency of the subcarrier signal, and then the sampled signal is quantized into eight-bit video data, which is recorded onto a magnetic tape having a width of 19 mm. However, since the magnetic tape has the width of 19 mm, the D2-VTR can not be reduced in the size and weight thereof, and this is requested for a camera integrally incorporated type VTR. According to these needs in the markets, the D3-VTR was manufactured as a product. In the D3-VTR, the composite video signal is quantized into eight-bit video data, and the video data is recorded onto a magnetic tape having a width of 12.7 mm.

In these digital VTRs, in order to deal with the transmission error caused in the recording and reproducing processes, a shuffling process is used in which the order of the data to be recorded onto a magnetic tape is changed so as to be different from that of the data as sampled. Executing the shuffling process can prevent errors from being caused in sequentially continuous sampled data, and can prevent errors from being caused in a plurality of data included in the same code sequence. This results in substantial improvement in the performance of the error concealment and in the performance of the error correction.

According to the recording apparatus for recording digital video signal disclosed in JP-A-62-253277, utilizing both of the first shuffling process performed in the unit of a block and the second shuffling process performed in the unit of a field can reduce influence of burst errors which may be caused in the recording and reproducing processes, thereby effectively performing the error correction and the error concealment.

However, the data amount which can be recorded in the above-mentioned digital VTRs is about 220 Mbps or about 130 Mbps, and therefore, these digital VTRs can not record digital video data having a data amount of 1.2 Gbps which is a wide band HDTV (High Definition Television) signal.

Under the above-mentioned circumstances, there has been developed a study of a compression VTR for reducing the digital video data having an extremely large data amount such as an HDTV signal or the like which is to be recorded by performing a compression process of the video data utilizing the characteristics of the video signal, and for recording the digital video data having the reduced data mount onto a magnetic tape. For example, according to the recording apparatus for recording digital component signal disclosed in JP-A-4-37293, a shuffling circuit is provided for changing the arrangement of the data in the unit of a block of the component signals which are located at the substantially same position in the same frame or the same field within the digital component signal. In the shuffling circuit, first of all, within one field, a plurality of blocks are formed in the digital video data, and then the digital video data is block-encoded in the unit of this block. Thereafter, the shuffling process is performed in the unit of this block, and the video data can be obtained in the unit of this block so that the block-decoding can be performed in the search process. Utilizing an orthogonal transform encoding method such as a DCT (Discrete cosine transform) or the like can perform a compression of video data so as to reduce the data amount of the digital video data to about 1/5 thereof.

In order to effectively turn the properties to the practical use, there has been suggested a system for recording an HDTV signal which is obtained by providing a compression adapter for compressing data of the HDTV signal in addition to the VTR of the present TV system (525 scanning lines and 60 fields/second, or 625 scanning lines and 50 fields/second). It has been desired to provide a system for recording both of the TV signal of the present system and the HDTV signal, using one VTR.

However, in the conventional recording apparatus for recording the digital video signal disclosed in JP-A-62-253277, when the digital video data which has been compressed using a compression adapter or the like is inputted thereto, the order of the inputted digital video data is changed by the above-mentioned first and second shuffling processes. Therefore, the video data within the compression block which is the fundamental block of the data compression is recorded onto a magnetic tape so that the video data is dispersed. Then, in the high-speed reproducing process in which all the data recorded on the magnetic tape is not reproduced, or in the case that a burst break is caused due to damage of the magnetic tape, the compressed video data having a plurality of compression blocks is included in the digital video data which could not reproduced. As a result, the burst errors in the data on the magnetic tape are enlarged on a television display. This results in that the original image can not be reproduced on the television display.

Further, in the conventional recording apparatus for recording the digital component signal disclosed in JP-A-4-37293, there is no mention of recording the digital video data as it is without data compression. In this conventional recording apparatus for recording the digital component signal, when non-compressed digital video data is recorded and reproduced without data compression, the shuffling process is performed in the unit of a block. Therefore, when burst errors occur in the recording and reproducing processes, there are caused relatively continuous errors on the television display. Then, the performance of the error concealment process for predictively interpolating an error sample based on the samples located in the periphery of the error sample becomes lowered.

US-A-5 218 454 representing the closest prior art from which the invention proceeds discloses a signal recording apparatus for recording a TV signal in which an audio signal such as a MUSE signal and a video signal are multiplexed in a time sharing manner in units of a given period of time. Such apparatus is arranged to code these video and audio signals alike, to dispersively allocate a discretely separated audio signal within the video signal, to provide symbols other than the symbols of the audio and video signals within each synchronizing block for the purpose of permitting the use of other video signal recording apparatuses. Upon recording signals of two kinds of different lengths, in order to commonly use hardware, an error correction code having a long length signal is constituted, and dummy data is added to a short length signal so as to obtain the same length error correction code.

Finally, EP-A-O 338 781 discloses a data transmission apparatus capable of selecting a first mode in which one data word is made up of m bits with a predetermined sampling frequency and a second mode in which one data word is composed of n bits (m > n) with the same sampling frequency. This apparatus comprises an insertion circuit for inserting bits (dummy data) of (m - n) bits into the data words of n bits before encoding, an error correction encoder commonly used for the first and second modes, a circuit for eliminating the inserted (m - n) bits from the data, and an adder for adding a block synchronization signal to the data prior to transmission or recording. Upon recording the signals of two kinds of 16 bit and 12 bits, in the 16 bits mode, a 16 bits signal is handled as two words, each word having a length of 8 bits, and then the error correction code is constituted. On the other hand, in the 12 bits mode, the 16 bits signal is constituted by adding 4 dummy bits to a 12 bits signal, and then the error correction code is constituted. Thereafter, the 4 dummy bits are removed upon recording the same.

### SUMMARY OF THE INVENTION

An object of the present invention is to provide a compression adapter for compressing digital video data using a high-efficiency encoding method, capable of being connected to an apparatus for recording and reproducing digital video data.

A further object of the present invention is to improve the interface connection between the compression adapter and the apparatus for recording and reproducing the digital video data compressed by the compression adapter.

In order to achieve the afore-mentioned objects, according to the present invention, there is provided a combination of an apparatus for recording and reproducing digital video data, and a compression adapter for use in connection with said apparatus,
wherein said compression adapter comprises:
compression means for comprising inputted digital video data, and outputting compressed digital video data words having a length of N bits, where N is a natural number, wherein said apparatus comprises:
error parity code adding means for adding a parity codes having a plurality of words to compressed digital video data having a plurality of words each having a length of N bits outputted from said compression means, and outputting the digital
video data words having a length of N bits together with the parity codes;
recording means for recording the digital video data and the parity codes onto a recording medium;
reproducing means for reproducing the digital video data including the parity codes from said recording medium; and
error correction means for correcting errors in the compressed digital video data words having a length of N bits reproduced by said reproducing means said errors being detected using the parity codes reproduced by said reproducing means, generating an error flag for error concealment if the compressed digital video data words having a length of N bits can not be corrected,
and outputting the compressed digital video data words having a length of N bits together with the error flag representing the compressed digital video data words having a length of N bits which can not be corrected;
characterized in that
the combination is adapated such that said apparatus may be used on its own or with said compression adapter separated therefrom;
wherein said compression adapter further comprises:
an output to be connected to the input of said apparatus; and
first data converting means provided between said compression means and said output, said first data converting means converting the compressed digital video data words having a length of N bits outputted from said compression means into first transmission data words having a length of N + 2 bits according to a predetermined data format by adding a dummy bit of value one and another dummy bit of value zero to each of the digital video data words having a length of N bits;
wherein said apparatus further comprises:
first data detecting means provided between said input of said apparatus and said error parity code adding means, said first data detecting means removing the two dummy bits from the first transmission data words having a length of N+2 bits which are received via said input of said apparatus so as to obtain digital video data words having a length of N bits, and outputting the digital video data words having a length of N bits; and
second data converting means provided between said error correction means and the output of said apparatus, said second data converting means converting compressed digital video data words having a length of N bits outputted from said error correction means into second transmission data words having a length of N + 2 bits according to a predetermined data format by adding the error flag and an inverted version of the error flag to each of the compressed digital video data words having a length of N bits;
wherein said compression adapter further comprises:
an input to be connected to said output of said apparatus;
second data detecting means, connected to said input of said adapter and responsive to transmission data words having a length N + 2 bits received via said input of said adapter, for separating the error flag from the second transmission data words having a length of N + 2 bits, and outputting the compressed digital video data words having a length of N bits and the error flag; and
data recovery means, responsive to inputted compressed digital video data words having a length of N bits and the error flag which are outputted from said second data detecting means, for decompressing the compressed digital video data words having a length of N bits outputted from said second data detecting means so as to obtain decompressed digital video data words, and concealing the error in the decompressed digital video data indicated by the error flag.

The present invention can provide a better interface between a compression adapter for compressing digital video data using a high-efficiency encoding method and decompressing the compressed digital video data, and an apparatus for recording and reproducing the digital video data compressed by the compression adapter.

In the present invention, the compression adapter is constituted so as to be separable from the apparatus for recording and reproducing digital video data such as a VTR or the like. Upon recording and reproducing the digital video signal of the current television system, the apparatus such as the VTR is used without the compression adapter of the present invention. On the other hand, upon recording and reproducing the digital video signal of the future television system such as an HDTV system, the apparatus such as the VTR is used with the compression adapter of the present invention. Thus, even though digital video signal of the future television system is recorded and reproduced, the conventional apparatus such as the VTR can be effectively utilized, advantageously.

### BRIEF DESCRIPTION OF THE DRAWINGS

These and other objects and features of the present invention will become clear from the following description taken in conjunction with the preferred embodiments thereof with reference to the accompanying drawings throughout which like parts are designated by like reference numerals, and in which:
Fig. 1 is a schematic diagram of a video tape recorder 74 and a compression adapter 201, according to a preferred embodiment of the present invention; and
Fig. 2 is a schematic diagram showing compressed digital video data which is used in the preferred embodiment.

### DETAILED DESCRIPTION OF THE PREFERRED EMBODIMENT

The preferred embodiment according to the present invention will be described below with reference to the attached drawings.

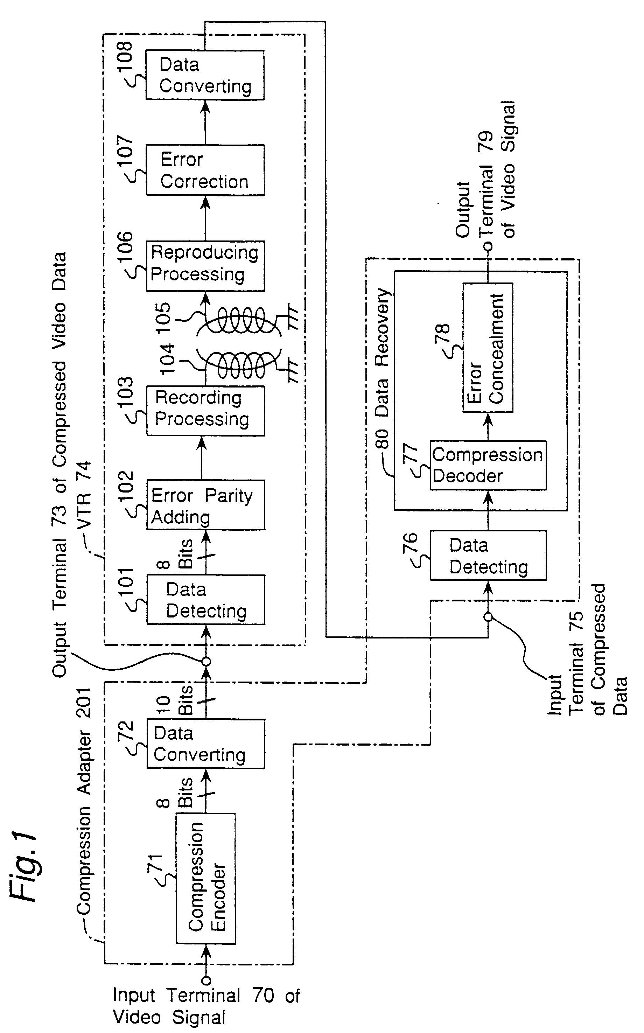

Fig. 1 shows, in a schematic block diagram, an apparatus for recording and reproducing compressed or non-compressed digital video data (referred to as VTR 74 hereinafter), according to the preferred embodiment of the present invention. In the preferred embodiment, compressed or non-compressed digital video data is inputted through an input terminal, and then the digital video data is recorded and reproduced.

In the present preferred embodiment, when recording and reproducing non-compressed video data, the luminance signal of one horizontal scanning line is sampled at 18 MHz, whereas the two color difference signals of one horizontal scanning line are sampled at 9 MHz, respectively. Further, 960 samples of the luminance signal of one horizontal scanning line is quantized into eight-bit video data, whereas 480 samples of the color difference signal of one horizontal scanning line is quantized into eight-bit video data. Furthermore, the number of recording horizontal scanning lines is 255 lines/field. Therefore, when the digital video data compressed by the recording and reproducing apparatus of the present preferred embodiment is recorded and reproduced, the upper limit of the compressed digital video data is (255 x 2 x 960) Bytes.

Further, Fig. 1 shows, in a schematic diagram, a compression adapter 201, according to the preferred embodiment of the present invention.

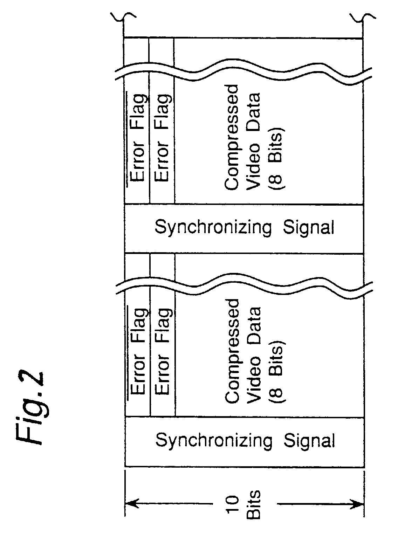

Referring to Fig. 1, the compression adapter 201 comprises:
(a) an input terminal 70 for inputting a video signal;
(b) a compression encoder 71 for compressing the video signal inputted through the input terminal 70 so as to obtain compressed video data of eight bits;
(c) a data converting circuit 72 for converting the compressed video data of eight bits outputted from the compression encoder 71 into transmission data of ten bits having a data format including the compressed digital video data of eight bits, which can be transmitted to the VTR 74;
(d) an output terminal 73 for outputting the compressed video data of ten bits to the VTR 74;
(e) an input terminal 75 for inputting reproduced compressed video data outputted from the compression adapter 201;
(f) a data detecting circuit 76 for decoding the compressed video data having the data format shown in Fig. 2 so as to convert the same into compressed video data having a predetermined data format, wherein the data detecting circuit 76 detects the synchronizing signal, the error flag, and the compressed digital video data included in the data format shown in Fig. 2 so as to separate these data, and then separately outputs the detected digital video data together with the synchronizing signal and the error flag;
(g) a compression decoder 77 for performing a decompression process and an inverse process of the DCT process for the digital video data of the compression blocks having no error which are indicated by the error flag so as to convert the same into the original digital video data, and outputting the decompressed digital video data together with the error flag;
(h) an error concealment circuit 78 for performing an error concealment process so as to predictively interpolating the digital video data using the digital video data of the SYNC block one frame before or one field before, and outputting the original digital video data having no error; and
(i) an output terminal 79 for outputting the decompressed original digital video data.

In the compression adapter 201, the compression decoder 77 and the error concealment circuit 78 is included in a data recovery circuit 80.

The VTR 74 comprises:
(a) a data detecting circuit 101 for detecting and extracting the compressed digital video data of eight bits from the inputted transmission data of ten bits, and outputting the extracted compressed digital video data of eight bits;
(b) an error parity adding circuit 102 for operating in the same manner as that of the error parity adding circuit 6 of the first preferred embodiment;
(c) a recording processing circuit 103 for modulating a carrier signal according to the digital video data using a predetermined modulation method and amplifying the modulated signal; and
(d) a recording magnetic head 104 for recording the modulated signal outputted from the recording processing circuit 103, onto a magnetic tape (not shown);
(e) a reproducing magnetic head 105 for reproducing the modulated signal recorded on the magnetic tape;
(f) a reproducing processing circuit 106 for amplifying the modulated signal reproduced by the reproducing magnetic head 105 and demodulating the amplified signal so as to obtain reproduced digital video data;
(g) an error correction circuit 107 for performing an error correction process for the digital video data outputted from the reproducing processing circuit 106, and outputting the reproduced compressed digital video data together with error flags;
(h) a data converting circuit 108 for converting the reproduced compressed digital video data and the error flags into digital transmission data having a data format in conformity to the data format represented in the CCIR No. 601 Recommendation.

The operation of the apparatuses shown in Fig. 1 when compressed digital video data is recorded and reproduced will be described below in detail.

First of all, the operation of the recording side will be described hereinafter. A video signal is inputted through the input terminal 70 to the compression encoder 71, and then the compression encoder 71 performs the DCT process and the high-efficiency encoding process such as the entropy encoding process or the like for the inputted video signal so as to convert the same into compressed digital video data of eight bits, and outputs the compressed digital video data of eight bits to the data converting circuit 72. Then the data converting circuit 72 adds the synchronizing signal, the error flag and the inverted signal of the error flag to the inputted compressed digital video data so as to convert the inputted data into the transmission data of ten bits. In the transmission data of ten bits outputted from the data converting circuit 72, since there is no error due to reproduction of the magnetic tape, all the error flags are set to one as dummy bits, and all the inverted flag thereof are set to zero as dummy bits. In other words, the transmission data of ten bits outputted from the data converting circuit 72 through the output terminal 73 includes the following data format:
(a) the most significant bit which is set to zero as a dummy bit;
(b) the second bit which is set to one as a dummy bit; and
(c) the lower eight bits composed of the compressed digital video data.

The transmission data having the above-mentioned data format is inputted to the data detecting circuit 101 of the VTR 74. Then, the data detecting circuit 101 detects and separates only the compressed digital video data of eight bits inserted in the lower eight bits from the inputted data, and outputs the separated compressed digital video data to the error parity circuit 102. The error parity adding circuit 102 adds the correction parity to the inputted data in a manner similar to that of the error parity adding circuit 102, and outputs the digital video data of eight bits together with the error parity through the recording processing circuit 103 to the recording magnetic head 104, thereby recording the digital video signal having these data onto the magnetic tape.

Next, the operation of the reproducing side will be described below. The digital video signal is reproduced from the magnetic tape, and then the reproducing processing circuit 106 performs the amplification process and the demodulation process for the inputted reproduced digital video signal so as to convert the inputted reproduced digital video signal into the digital video data, which is outputted to the error correction circuit 107. The error correction circuit 107 performs the error correction process for the inputted digital video data based on the parity code included in the digital video data in order to correct the errors which may be caused in the recording and reproducing processes, and outputs to the data converting circuit 108, not only the corrected digital video data but also an error flag representing the position of the digital video data which could not be corrected by the error correction circuit 107. The data converting circuit 108 converts the inputted data into transmission data having the following data format shown in Fig. 2 and in conformity to the data format represented in the CCIR No. 601 Recommendation, and then outputs the converted transmission data together with the synchronizing signal:
(a) the most significant bit in which the inverted signal of the error is inserted;
(b) the second bit in which the error flag is inserted; and
(c) the lower eight bits in which the compressed digital video data.

Thereafter, the data outputted from the data converting circuit 108 of the VTR 108 is inputted through the input terminal 75 to the data detecting circuit 76, and then the data converting circuit 76 detects and separates the synchronizing signal, the error flag, the inverted signal of the error flag, and the compressed video data, and separately outputs these data to the compression decoder 77 of the data recovery circuit 80. Thereafter, the compression decoder 77 performs the decompression process and the inverted process of the DCT process for the inputted digital video data of the compression blocks having no error so as to convert the same into the original digital video data, and outputs the decompressed digital video data and the digital video data of compression blocks having errors to the error concealment circuit 78. The error concealment circuit 78 performs the error concealment process for the digital video data of compression blocks having errors corresponding to error flags so as to predictively interpolating the error digital video data using the decompressed data one frame before or one field before, thereby obtaining the interpolated no-error digital video data. This results in obtaining the original digital video data, which is outputted through the output terminal 79.

In the present preferred embodiment, the error concealment process is performed for the output data from the compression decoder 77, however, the present invention is not limited to this. The error concealment process may be performed for the compressed digital video data which is the output data from the data detecting circuit 76.

In the recording side of the apparatuses shown in Fig. 1, in the data converting circuit 72, the inputted data is converted into the transmission data having the following data format:
(a) the most significant bit to which data "one" is assigned;
(b) the second bit to which data "zero" is assigned; and
(c) the lower eight bits to which the compressed digital video data is assigned. This can set "000" to "003" in the sexadecimal notation and "3FD" to "3FF" in the hexadecimal notation which are prohibited in the 10-bit digital interface, to inhibit codes. The above-mentioned transmission data of ten bits having the above-mentioned data format can be transmitted in conformity to the data format represented in the CCIR No. 601 Recommendation.

In the present preferred embodiment, the above-mentioned data format includes the eight-bit digital video data, however, the present invention is not limited to this. The above-mentioned data format may include natural number-N-bit digital video data.

In the reproducing side of the apparatuses shown in Fig. 1, in the data converting circuit 108, the error flag and the inverted signal of the error flag, which represents an error caused in the recording and reproducing processes of the compressed digital video data, are assigned to the highest two of the ten bits, whereas the compressed digital video data is assigned to the lower eight bits, thereby extending the data format of eight bits to the data format of ten bits. This can set "000" to "003" in the hexadecimal notation and "3FD" to "3FF" in the hexadecimal notation which are prohibited in the 10-bit digital interface, to inhibit codes. The data of ten bits having the above-mentioned data format can be transmitted in conformity to the data format represented in the CCIR No. 601 Recommendation.

In the present preferred embodiment, the compression adapter 201 comprising the compression encoder 71, the data converting circuit 72, the data detecting circuit 76 and the data recovery circuit 80 can be constituted so as to be separated from the VTR 74. Upon recording and reproducing the digital video signal of the current television system, the VTR 74 is used without the compression adapter 201. On the other hand, upon recording and reproducing the digital video signal of the future television system such as an HDTV system or the like, the VTR 74 is used with the compression adapter 201. Thus, even though digital video signal of the future television system is recorded and reproduced, the conventional VTR can be effectively utilized, advantageously.

As described above, an interface between the VTR 74 and the compression adapter 201 is only one serial transmission line, and then another transmission line for transmitting the error flag is not necessary, advantageously.

## Claims

1. A combination of an apparatus (74) for recording and reproducing digital video data, and a compression adapter (201) for use in connection with said apparatus (74),
wherein said compression adapter (201) comprises:
compression means (71) for compressing inputted digital video data, and outputting compressed digital video data words having a length of N bits, where N is a natural number,
wherein said apparatus (74) comprises:
error parity code adding means (102) for adding a parity codes having a plurality of words to compressed digital video data having a plurality of words each having a length of N bits outputted from said compression means (71), and outputting the
digital video data words having a length of N bits together with the parity codes;
recording means (103, 104) for recording the digital video data and the parity codes onto a recording medium;
reproducing means (105, 106) for reproducing the digital video data including the parity codes from said recording medium; and
error correction means (107) for correcting errors in the compressed digital video data words having a length of N bits reproduced by said reproducing means (105, 106), said errors being detected using the parity codes reproduced by said reproducing means (105, 106), generating an error flag for error concealment if the compressed digital video data words having a length of N bits can not be corrected,
and outputting the compressed digital video data words having a length of N bits together with the error flag representing the compressed digital video data words having a length of N bits which can not be corrected;
characterized in that
the combination is adapated such that said apparatus (74) may be used on its own or with said compression adapter (201) separated therefrom;
wherein said compression adapter (201) further comprises:
an output (73) to be connected to the input of said apparatus (74); and
first data converting means (72) provided between said compression means (71) and said output (73), said first data converting means (72) converting the compressed digital video data words having a length of N bits outputted from said compression means (71) into first transmission data words having a length of N + 2 bits according to a predetermined data format by adding a dummy bit of value one and another dummy bit of value zero to each of the digital video data words having a length of N bits;
wherein said apparatus (74) further comprises:
first data detecting means (101) provided between said input of said apparatus (74) and said error parity code adding means (102), said first data detecting means (101) removing the two dummy bits from the first transmission data words having a length of N + 2 bits which are so as to obtain digital video data words having a length of N bits, and outputting the digital video data words having a length of N bits; and
second data converting means (108) provided between said error correction means (107) and the output of said apparatus (74), said second data converting means (108) converting compressed digital video data words having a length of N bits outputted from said error correction means (107) into second transmission data words having a length of N + 2 bits according to a predetermined data format by adding the error flag and an inverted version of the error flag to each of the compressed digital video data words having a length of N bits;
wherein said compression adapter (201) further comprises:
an input (75) to be connected to said output of said apparatus (74);
second data detecting means (76), connected to said input (75) of said adapter and responsive to transmission data words having a length N + 2 bits received via said input (75) of said adapter, for separating the error flag from the second transmission data words having a length of N + 2 bits, and outputting compressed digital video data words having a length of N bits and the error flag; and
data recovery means (80), responsive to inputted compressed digital video data words having a length of N bits and the error flag which are outputted from said second data detecting means (76), for decompressing the compressed digital video data words having a length of N bits outputted from said second data detecting means (76) so as to obtain decompressed digital video data words, and concealing the error in the decompressed digital video data indicated by the error flag.

## Patentansprüche

1. Kombination eines Gerätes (74) zur Aufzeichnung und Wiedergabe von digitalen Videodaten und eines Kompressionsadapters (201) zur Verwendung in Verbindung mit dem Gerät (74),
wobei der Kompressionsadapter (201) aufweist:
eine Kompressionseinrichtung (71) zur Komprimierung von eingegebenen digitalen Videodaten und Ausgabe von komprimierten digitalen Videodatenwörtern mit einer Länge von N Bits, wobei N eine natürliche Zahl ist;
wobei das Gerät (74) aufweist:
eine Fehlerparitätscodeaddiereinrichtung (102) zur Addition eines Paritätscodes mit mehreren Wörtern zu den komprimierten digitalen Videodaten mit mehreren Wörtern mit jeweils einer Länge von N Bits, welche von der Kompressionseinrichtung (71) ausgegeben worden sind, und zur Ausgabe der digitalen Videodatenwörter mit einer Länge von N Bits zusammen mit dem Paritätscode;
eine Aufzeichnungseinrichtung (103, 104) zur Aufzeichnung der digitalen Videodaten und des Paritätscodes auf einem Aufzeichnungsmedium;
eine Wiedergabeeinrichtung (105, 106) zur Wiedergabe der digitalen Videodaten mit den Partitätscodes vom Aufzeichnungsmedium; und
eine Fehlerkorrektureinrichtung (107) zur Korrektur von Fehlern in den komprimierten digitalen Videodatenwörtern mit einer Länge von N Bits, die von der Wiedergabeeinrichtung (105, 106) wiedergegeben worden sind, wobei die Fehler unter Verwendung der Paritätscodes erfaßt werden, welche von der Wiedergabeeinrichtung (105, 106) wiedergegeben worden sind, zur Erzeugung eines Fehler-Flag zum Verbergen des Fehlers, falls die komprimierten digitalen Videodatenwörter mit einer Länge von N Bits nicht korrigiert werden können, und zur Ausgabe der komprimierten digitalen Videodatenwörter mit einer Länge von N Bits zusammen mit dem Fehler-Flag, das diejenigen komprimierten digitalen Videodatenwörter mit einer Länge von N Bits repräsentiert, die nicht korrigiert werden können;
dadurch gekenzeichnet, dass
die Kombination so adaptiert ist, dass das Gerät (74) allein oder mit dem von diesem getrennten Kompressionsadapter (201) verwendet werden kann;
wobei der Kompressionsadapter (201) außerdem aufweist:
einen Ausgang (73), der an den Eingang des Gerätes (74) anzuschließen ist; und eine erste Datenumwandlungseinrichtung (72), die zwischen der Kompressionseinrichtung (71) und dem Ausgang (73) vorgesehen ist, wobei die erste Datenumwandlungseinrichtung (72) die komprimierten digitalen Videodatenwörtern mit einer Länge von N Bits, die von der Kompressionseinrichtung (71) ausgegeben worden sind, in erste Übertragungsdatenwörter mit einer Länge von N+2 Bits gemäß einem vorbestimmten Datenformat umwandelt, indem ein Dummy-Bit vom Wert Eins und ein weiteres Dummy-Bit vom Wert Null zu jedem der digitalen Videodatenwörter mit einer Länge von N Bits hinzuaddiert werden;
wobei das Gerät (74) außerdem aufweist:
eine erste Datenerfassungseinrichtung (101), die zwischen dem Eingang des Gerätes (74) und der Fehlerparitätscodeaddiereinrichtung (102) vorgesehen ist, wobei die erste Datenerfassungseinrichtung (101) die beiden Dummy-Bits aus den ersten Übertragungsdatenwörtern mit einer Länge von N + 2 Bits beseitigt, welche über den Eingang des Gerätes (74) empfangen werden, um digitale Videodatenwörter mit einer Länge von N Bits zu erhalten, und die digitalen Videodatenwörter mit einer Länge von N Bits ausgibt; und
eine zweite Datenumwandlungseinrichtung (108), die zwischen der Fehlerkorrektureinrichtung (107) und dem Ausgang des Gerätes (74) vorgesehen ist, wobei die zweite Datenumwandlungseinrichtung (108) komprimierte digitale Videodatenwörter mit einer Länge von N Bits, die von der Fehlerkorrektureinrichtung (107) ausgegeben worden sind, in zweite Übertragungsdatenwörter mit einer Länge von N + 2-Bits gemäß einem vorbestimmten Datenformat umwandelt, indem das Fehler-Flag und eine invertierte Version des Fehler-Flags zu jedem der komprimierten digitalen Videodatenwörter mit einer Länge von N Bits hinzuaddiert werden;
wobei der Kompressionsadapter (201) außerdem aufweist:
einen Eingang (75), der an den Ausgang des Gerätes (74) anzuschließen ist;
eine zweite Datenerfassungseinrichtung (76), die an den Eingang (75) des Adapters angeschlossen ist und auf die Übertragungsdatenwörter mit einer Länge von N + 2 Bits, die über den Eingang (75) des Adapters empfangen werden, anspricht, zur Trennung des Fehler-Flag von den zweiten Übertragungsdatenwörtern mit einer Länge von N + 2 Bits und Ausgabe von komprimierten digitalen Videodatenwörtern mit einer Länge von N Bits und des Fehler-Flag; und
eine Datenwiedergewinnungseinrichtung (80), die auf die eingegebenen komprimierten digitalen Videodatenwörter mit einer Länge von N Bits und das Fehler-Flag anspricht, welche von der zweiten Datenerfassungseinrichtung (76) ausgegeben werden, zur Dekomprimierung der komprimierten digitalen Videodatenwörter mit einer Länge von N Bits, die von der zweiten Datenerfassungseinrichtung (76) ausgegeben worden sind, um dekomprimierte digitale Videodatenwörter zu erhalten, und zum Erhalten des Fehlers in den dekomprimierten digitalen Videodaten, der vom Fehler-Flag angezeigt wird.

## Revendications

1. Combinaison d'un appareil (74) pour enregistrer et reproduire des données d'image vidéo numériques, et d'un adaptateur de compression (201) à utiliser en liaison audit appareil (74),
dans lequel ledit adaptateur de compression (201) comprend :
des moyens de compression (71) pour comprimer des données numériques d'image vidéo entrantes, et pour transférer des mots numériques comprimés d'image vidéo, ayant une longueur de N bits, où N est un nombre naturel,
dans lequel ledit appareil (74) comprend :
des moyens pour ajouter des codes de parité d'erreurs (102), pour ajouter des codes de parité ayant une pluralité de mots aux données numériques comprimées d'image vidéo ayant une pluralité de mots, chacun ayant une longueur de N bits transférées depuis lesdits moyens de compression (71), et pour transférer les mots numériques d'image vidéo ayant une longueur de N bits en même temps que les codes de parité ;
des moyens d'enregistrement (103, 104) pour enregistrer les données numériques d'image vidéo ainsi que les codes de parité sur un support d'enregistrement ;
des moyens de reproduction (105, 106) pour reproduire les données numériques d'image vidéo comprenant les codes de parité provenant dudit support d'enregistrement ; et
des moyens de correction d'erreurs (107) pour corriger les erreurs au niveau des mots numériques comprimés d'image vidéo ayant une longueur de N bits reproduites par lesdits moyens de reproduction (105, 106), lesdites erreurs étant détectées en utilisant les codes de parité reproduits par lesdits moyens de reproduction (105, 106) générant un indicateur d'erreurs pour masquer les erreurs si les mots numériques comprimés d'image vidéo ayant une longueur de N bits ne peuvent pas être corrigés,
et transfère les mots numériques comprimés d'image vidéo ayant une longueur de N bits en même temps que l'indicateur d'erreurs représentant les mots numériques comprimés d'image vidéo ayant une longueur de N bits qui ne peuvent pas être corrigés ;
caractérisé en ce que,
cette combinaison est adaptée de telle manière que ledit appareil (74) peut être utilisé soit seul soit en conjonction avec ledit adaptateur de compression (201) dont il est séparé ;
dans lequel ledit adaptateur de compression (201) comprend en outre :
une sortie (73) devant être raccordée à l'entrée dudit appareil (74) ; et
des premiers moyens de conversion des données (72) proposés entre lesdits moyens de compression (71) et ladite sortie (73), lesdits premiers moyens de conversion des données (72) convertissant les mots numériques comprimés d'image vidéo ayant une longueur de N bits transférés depuis lesdits moyens de compression (71) vers les mots de première transmission ayant une longueur de N + 2 bits conformément au format prédéterminé des données en ajoutant un bit de remplissage de valeur un et un autre bit de remplissage de valeur zéro à chacun des mots numériques d'image vidéo ayant une longueur de N bits ; et
dans lequel ledit appareil (74) comprend en outre :
des premiers moyens de détection des données (101) proposés entre ladite entrée dudit appareil (74) et lesdits moyens pour ajouter-les codes de parité d'erreurs (102), lesdits premiers moyens de détection des données (101) supprimant les deux bits de remplissage contenus dans les mots de la première transmission ayant une longueur de N + 2 bits qui sont reçus par l'intermédiaire de ladite entrée (74) dudit appareil afin d'obtenir des mots numériques d'image vidéo ayant une longueur de N bits, et transférant les mots numériques d'image vidéo ayant une longueur de N bits ; et
des seconds moyens de conversion des données (108) proposés entre lesdits moyens de correction d'erreurs (107) et la sortie dudit appareil (74), lesdits seconds moyens de conversion des données (108) convertissant les mots numériques comprimés d'image vidéo ayant une longueur de N bits transférés depuis lesdits moyens de correction d'erreurs (107) vers les mots de seconde transmission ayant une longueur de N + 2 bits conformément au format prédéterminé des données en ajoutant un indicateur d'erreurs et une version inversée de l'indicateur d'erreurs à chacun des mots numériques comprimés d'image vidéo ayant une longueur de N bits ;
dans lequel ledit adaptateur de compression (201) comprend en outre :
une entrée (75) devant être raccordée à ladite sortie dudit appareil (74) ;
des seconds moyens de détection des données (76), raccordés à ladite entrée (75) dudit adaptateur et ce, d'une manière sensible aux mots de transmission ayant une longueur N + 2 bits reçus par l'intermédiaire de ladite entrée (75) dudit adaptateur, pour séparer l'indicateur d'erreurs des mots de seconde transmission ayant une longueur de N + 2 bits, et pour transférer les mots numériques comprimés d'image vidéo ayant une longueur de N bits et présentant l'indicateur d'erreurs ; et
des moyens de récupération des données (80), opérant d'une manière sensible aux mots numériques comprimés d'image vidéo entrés ayant une longueur de N bits et présentant l'indicateur d'erreurs qui sont transférés depuis lesdits seconds moyens de détection des données (76), pour décompresser les mots numériques comprimés d'image vidéo ayant une longueur de N bits transférés depuis lesdits seconds moyens de détection des données (76) de manière à obtenir des mots numériques décomprimés d'image vidéo, et pour masquer l'erreur contenue dans les données numériques décomprimées repérée par l'indicateur d'erreurs.
